# EUROPÄISCHE PATENTSCHRIFT

(11) **EP 1 319 884 B1**
(45) Veröffentlichungstag und Bekanntmachung des Hinweises auf die Patenterteilung: **28.12.2005**
(21) Anmeldenummer: 02024087.5
(22) Anmeldetag: 29.10.2002
(51) Int. Cl.: F16L 37/38

(54) **Universales Anschlussstück**
Universal fitting
Dispositif de raccordement universel

(30) Priorität: 11.12.2001 DE 10160649; 11.12.2001 DE 10160650
(43) Veröffentlichungstag der Anmeldung: 18.06.2003
(73) Patentinhaber: ADAM OPEL AG, 65423 Rüsselsheim (DE)
(72) Erfinder: Brünjes, Arend, Dipl.-Ing., 64569 Nauheim (DE)

(56) Entgegenhaltungen:
- EP-A- 0 397 942
- EP-A- 1 271 039
- WO-A-03/041984
- DE-A- 3 405 229
- DE-U- 20 118 641
- WEH: "The complete refuling system for NGV's" WEH-PRODUCTS FOR THE NGV-INDUSTRY, April 2001 (2001-04), XP002214688 Gefunden im Internet: <URL:http://www.weh.com/english/pdf/KAT15E 0401.pdf> [gefunden am 2002-09-25]

## Beschreibung

Die vorliegende Erfindung betrifft einen Kombinations-Anschlussnippel für die Übertragung von unter Druck vorgespannten gasförmigen und/oder flüssigen Fluiden, insbesondere ein Füllventil zum Betanken von Kraftfahrzeugen mit Erdgas, nach dem Oberbegriff des Anspruchs 1.

Derzeit existieren für erdgasbetriebene Kraftfahrzeuge in Europa zwei dominierende Arten von Betankungsventilen, mit denen das Erdgas von der Zapfsäule in den Tank des Kraftfahrzeugs gefüllt werden kann. Als eine Variante hat sich in Europa, Asien, Amerika und Australien die so genannte NGV1-Standard-Norm heraus kristallisiert. Eine weitere Variante bildet die Ausnahme hiervon, die sich in Italien als so genannter italienischer Standard etabliert hat. Dies hängt wohl damit zusammen, dass die italienischen Befüllventile zeitlich vor den Befüllventilen gemäß NGV1-Standard entwickelt worden sind und sich damit im italienischen Markt durchsetzen konnten.

Betankungsventile gemäß dem NGV1-Standard werden in der Praxis beispielsweise von der Firma WEH GmbH, Verbindungstechnik, 89257 Illertissen hergestellt und vertrieben. Derlei NGV1-Betankungsventile sind beispielsweise in der DE 296 13 134 U1 oder in der DE 38 15 350 A1 beschrieben bzw. im Katalog Nr. 15 (Stand 04/01) mit dem Titel "Das komplette Betankungssystem für Erdgasfahrzeuge" von der Firma WEH GmbH publiziert worden.

Entsprechend den beiden unterschiedlichen Betankungsventilen sind in der Praxis die dem italienischen Standard entsprechenden Anschluss- bzw. Kupplungsnippel für die Übertragung von unter Druck vorgespannten gasförmigen und/oder flüssigen Fluiden bekannt geworden, die auch als Erdgas-Füllventile zum Befüllen von Kraftfahrzeuggastanks bezeichnet werden. Analoges gilt für die Anschluss- bzw. Kupplungsnippel passend zu den Füllkupplungen gemäß des NGV1-Standards. Zwei mögliche Varianten der von der Firma WEH GmbH hergestellten und vertriebenen Anschluss- bzw. Kupplungsnippel nach dem NGV1-Standard sind beispielsweise in der DE 43 40 610 A1 oder der DE 43 40 783 A1 beschrieben.

Nachteilig ist, dass Füllkupplungen gemäß dem NGV1-Standard ausschließlich auf Anschluss- bzw. Kupplungsnippel gemäß dem NGV1-Standard passen und dementsprechend die hauptsächlich von der Firma EMER hergestellten und vertriebenen Füllkupplungen gemäß dem italienischen Standard ausschließlich auf Anschluss- bzw. Kupplungsnippel gemäß dem italienischen Standard anflanschbar sind. Demzufolge muss ein Kraftfahrzeugführer immer dann, wenn er mit einem erdgasbetriebenen Fahrzeug mit einem Anschlussnippel gemäß NGV1-Standard von Europa nach Italien fährt, einen passenden Adapter mit sich führen, damit er in Italien Erdgas tanken kann. Umgekehrt muss ein italienischer Kraftfahrzeugführer, der mit seinem Fahrzeug mit einem Anschlussnippel gemäß dem italienischen Standard aus Italien nach Europa fährt, einen anderen Adapter mit sich führen, der auf den NGV1-Standard passt, so dass er außerhalb Italiens in Europa Erdgas tanken kann.

Nachdem derlei Adapterkupplungen pro Stück wenigstens EUR 250,-- kosten, ist dies ein nichttragbarer Missstand, der eine verstärkte Verbreitung von erdgasbetriebenen Kraftfahrzeugen blockiert. Zudem sind derlei Adapterkupplungen sehr groß, schwer und nicht einfach zu handhaben. Wenn sie im Fahrzeug mitgeführt werden, benötigen sie relativ viel Platz, so belegen sie beispielsweise bereits alleine ein komplettes Handschuhfach. Im Kofferraum wäre zwar ausreichend Platz, doch dort können sie ohne Schutzhülle oder dgl. nicht mitgeführt werden, da sie dort einer unakzeptablen Verschmutzungsgefahr ausgesetzt sind. Folglich werden derlei Adapterkupplungen schlussendlich zumindest im Fahrgastraum aufbewahrt, wo sie einerseits dann häufig im Weg sind und andererseits gerade bei Auffahrunfällen zu nicht mehr kontrollierbaren Geschossen werden können und damit eine permanente Gefahrenquelle für die Insassen des Fahrzeugs darstellen.

Schlussendlich wiegt wohl als schwerster Nachteil, dass die Einsparungen, die durch den günstigen Erdgasantrieb gewonnen werden können, durch die Anschaffung eines derart teuren Adapter weitestgehend wieder aufgebraucht werden. Dies macht erdgasbetriebene Kraftfahrzeuge für den Durchschnittsverbraucher trotz immenser Umweltschutzvorteile uninteressant.
Aus der DE 34 05 229 A1 ist schließlich ein Anschlussstück für Schlauchleitungen in Form von Schraubstutzen mit Innengewinde bekannt, bei dem anstelle von mehreren Anschlussstücken mit jeweils unterschiedlichen Anschlussgewinden und Schlauchanschlussstutzen einerseits eine Innenabstufung im Gewindeanschlussteil mit zwei unterschiedlichen Gewindedurchmessern und andererseits ein Schlauchanschlussteil mit zwei unterschiedlichen Durchmessern der Anschlussstutzen vorgesehen sind. Eine solche Lösung weist zwar eine gewünschte kompakte Bauweise auf ist jedoch überwiegend im Baugewerbe oder auch in der Haus- und Landwirtschaft zum Betreiben von Dampfstrahlgeräten, Wasserhahnen oder dergleichen verwendbar. Wegen den genormten Anforderungen an Betankungsventile für Kraftfahrzeuge ist diese Bauweise zur Herstellung von Anschlussnippeln weniger geeignet.

Demzufolge ist es Aufgabe der Erfindung den vorgenannten Missständen abzuhelfen, und insbesondere einen Anschlussnippel vorzuschlagen, der so ausgebildet ist, dass sowohl Füllkupplungen gemäß dem NGV1-Standard als auch Füllkupplungen gemäß dem italienischen Standard problemlos angeschlossen bzw. angeflanscht werden können.

Diese Aufgabe wird gelöst durch die Merkmale des Anspruchs 1. Durch die nach vorne Verlagerung des Filters liegt dessen rückwärtige Abstützung auf einer gedachten Linie, die in Längsrichtung vor der dem füllseitig ersten Kupplungsabschnitt zugeordneten Nut liegt, vorzugsweise vor der NGV1-Standard-Nut platziert ist. Hiermit wird in vorteilhafter Weise der Tatsache Rechnung getragen, dass die Füllkupplungen gemäß dem NGV1-Standard wesentlich kürzer ausgebildet sind, als die Füllkupplungen gemäß dem italienischen Standard.

Dabei wird der vorliegenden Erfindung zufolge erstmals ein Anschlussnippel für die Übertragung von unter Druck stehenden bzw. vorgespannten gasförmigen und/oder flüssigen Fluiden vorgeschlagen, der vorzugsweise als Füllventil zum Betanken von Kraftfahrzeugen mit Erdgas ausgebildet ist, welches ein Nippelgehäuse mit Durchflusskanal aufweist, welches erforderlichenfalls über einen rückwärtigen Befestigungsabschnitt für einen Behälter und/oder eine Leitung verfügt, mittels dem die Leitung zum Kraftfahrzeug-Tank angeschlossen und mittels dem der Anschlussnippel an der Fahrzeugkarosserie montiert werden kann. Hierbei ist stirnseitig ein vorderer Kupplungsabschnitt ausgebildet, der vorzugsweise zum Angriff einer Füllkupplung beispielsweise mit Spannzangenmechanismus oder mit Kugelspannringmechanismus dient. Hierbei wird erstmals vorgeschlagen, dass ein Filter im Nippelgehäuse zur Stirnseite des Nippelgehäuses hin derart vorgelagert ist, dass eine rückwärtige Abstützung des Filters auf einer gedachten Linie liegt, die in Längsrichtung vor der dem füllseitig ersten Kupplungsabschnitt zugeordneten Nut liegt.

Hierdurch werden in vorteilhafter Weise die vorgenannten Nachteile vermieden und der erfindungsgemäße Kombinations-Anschlussnippel kann sowohl in Italien zum Betanken von Kraftfahrzeugen mit Erdgas mit den dort bekannten italienischen Füllkupplungen verwendet werden als auch zum Betanken im restlichen Europa, Asien, Amerika oder Australien mit den dort bekannten Füllkupplungen gemäß dem NGV1-Standard.

Hierbei ist weiter von Vorteil, dass mit dem erfindungsgemäßen Kombinations-Anschlussnippel keine Adapterkupplung mehr im Fahrzeug mitgeführt werden muss, so dass wertvoller Stauraum nicht unnötig blockiert ist und eine nicht sicher verwahrte Adapterkupplung infolge ihres entbehrlich Seins auch nicht mehr insbesondere bei Unfällen unkontrolliert durch die Fahrgastzelle fliegen und die Insassen verletzen kann. Indem eine Adapterkupplung dank des erfindungsgemäßen Kombinations-Anschlussnippels nicht mehr benutzt werden muss, ist die vormals bei der Verwendung eines Adapters beim Benutzer aufgetretene Unsicherheit ausgeschlossen. Diese frühere Unsicherheit war aus psychologischer Sicht betrachtet wohl der Hauptgrund für die geringe Akzeptanz von Erdgas-Fahrzeugen und mit deren Wegfall kann sich in vorteilhafter Weise nun auch bei Verwendung des erfindungsgemäßen Kombinations-Anschlussnippels die Akzeptanz von erdgasbetriebenen Kraftfahrzeugen deutlich erhöhen. Zudem macht der erfindungsgemäße Kombinations-Anschlussnippel den Benutzer unabhängig von den verschiedenen Füllkupplungen bzw. Betankungsventilen, er senkt die Produktionskosten beim Hersteller sowohl logistisch durch die verstärkte Verwendung gleicher Teile als auch in der Lagerhaltung durch die Reduzierung der unterschiedlichen Länderausführungen.

Vorteilhafte Weiterbildungen des erfindungsgemäßen Kombinations-Anschlussnippels ergeben sich aus den Merkmalen der Unteransprüche.

Am Kombinations-Anschlussnippel ist der Kupplungsabschnitt zum Angriff von Füllkupplungen beispielsweise gemäß dem NGV1-Standard als auch gemäß dem italienischen Standard ausgebildet. Hierzu ist im füllseitig ersten Kupplungsabschnitt eine erste ringartig umlaufende Nut in einem definierten Abstand von der Stirnseite des Anschlussnippels ins Nippelgehäuse von außen eingearbeitet, wobei dieser Abstand vorzugsweise dem durch den NGV1-Standard definierten Abstand entspricht. Weiterhin ist im zweiten Kupplungsabschnitt eine zweite Nut in einem definierten Abstand von der Stirnseite des Anschlussnippels ins Nippelgehäuse von außen eingearbeitet, wobei dieser Abstand vorzugsweise dem durch den italienischen Standard definierten Abstand entspricht.

Diese beiden Nuten können vorzugsweise spanabhebend mittels CNC-Dreh- und/oder Fräsmaschinen bzw. modernen Bearbeitungszentren eingefräst oder ausgedreht werden. Diese Nuten oder Auskehlungen bieten den Vorteil, dass die am meisten verbreiteten Füllkupplungen mit Spannelementen oder Kugelspannringmechanismen, wie jene vom NGV1-Standard oder gemäß dem italienischen Standard hervorragend am erfindungsgemäßen Kombinations-Anschlussnippel angreifen und mit diesem einen perfekten Dichtschluss herstellen können.

Einer weiter bevorzugten Ausführungsform zufolge beginnt die erste Nut des füllseitig ersten Kupplungsabschnittes mit einer ersten abfallenden schrägen Flanke in Längsrichtung gemessen mit einem Abstand von 11 bis 13 mm, vorzugsweise 12 mm, von der Stirnseite aus gemessen. Die schräge Flanke ihrerseits weist eine Ausdehnung von etwa 1,5 mm bis 2,5 mm, vorzugsweise von 2 mm, in Längsrichtung gemessen, auf. An diese erste abfallende schräge Flanke schließt sich der Nutgrund an, welcher sich in Längsrichtung gemessen in etwa um 4 bis 6 mm, vorzugsweise um 5 mm, erstreckt. Dem im Wesentlichen parallel zur Längsrichtung orientierten Nutgrund schließt sich eine zweite aufsteigende schräge Flanke an, die sich in Längsrichtung gemessen in etwa 1,5 bis 2,5 mm, vorzugsweise etwa 2 mm, erstreckt. Hierbei führt die erste abfallende schräge Flanke vom Gehäuseaußendurchmesser des füllseitig ersten Kupplungsabschnittes hinein zum Nutgrund-Durchmesser der ersten Nut und die zweite aufsteigende schräge Flanke wiederum hinauf zum Gehäuseaußendurchmesser des zweiten Kupplungsabschnittes. Die so ausgebildete Nutkontur bietet den Vorteil, dass sie sowohl für die aus dem Stand der Technik bekannten Spannzangenmechanismen als auch für die bekannten Kugelspannringmechanismen optimal zum Angriff geeignet ist und damit eine sehr gute Abdichtung des Anschlussnippels gegenüber der Fülldichtung erzielt werden kann. In weiter vorteilhafter Weise kann hierbei im Falle eines Angriffs eines Spannzangenmechanismus insbesondere die erste abfallende schräge Flanke bezüglich deren Oberflächenbeschaffenheit auf die dort formschlüssig anliegenden Spannzangen abgestellt werden, so dass ein perfekter Dichtsitz realisierbar ist. Sofern ein Kugelspannringmechanismus zum Angriff kommt, kann insbesondere die zylindrische Fläche des Nutgrundes hinsichtlich deren Oberflächenbeschaffenheit speziell darauf abgestimmt werden, so dass in vorteilhafter Weise mit ein und derselben Nut jeweils für verschiedene Spannmechanismen optimale Dichtsitzverhältnisse geschaffen werden können.

Bei einer weiter bevorzugten Ausführungsform beginnt die zweite Nut des füllseitig zweiten Kupplungsabschnittes mit einer ersten abfallenden schrägen Flanke in einem Abstand von etwa 32 bis 34 mm, vorzugsweise 33 mm, in Längsrichtung gemessen, von der Stirnseite entfernt. Die erste schräge Flanke der zweiten Nut weist hierbei in Längsrichtung gemessen eine Ausdehnung von etwa 1,5 bis 2,5 mm, vorzugsweise von 2 mm, auf. An diese erste Flanke schließt sich der parallel zur Längsachse orientierte Nutgrund an, der sich seinerseits in Längsrichtung gemessen in etwa 2,5 bis 3,5 mm, vorzugsweise 3 mm, ausdehnt. Dem Nutgrund folgt seinerseits eine zweite aufsteigende schräge Flanke, die in Längsrichtung gemessen ihrerseits eine Ausdehnung von etwa 1,5 mm bis 2,5 mm, vorzugsweise von 2 mm aufweist. Hinsichtlich der Ausgestaltung der gegenüber den Spannmechanismen in Anlage kommenden abdichtenden Flächen gilt das vorstehend Ausgeführte analog.

Die Übergänge zwischen den jeweiligen Flanken und dem Nutgrund können mit geeigneten Radien verrundet sein. Ebenso kann die Stirnseite des Kombinations-Anschlussnippels zum besseren Ansetzens einer Füllkupplung einen geeigneten Radius oder eine Fase aufweisen.

Gemäß einer weiter bevorzugten Ausführungsform beträgt der Gehäuseaußendurchmesser des ersten Kupplungsabschnittes zwischen 19 und 21 mm, vorzugsweise 20 mm. Der zweite Gehäuseaußendurchmesser beim zweiten Kupplungsabschnitt beträgt zwischen 22 mm und 24 mm, vorzugsweise 23 mm.

Weiterhin stellt die erste Nut entsprechend einer weiter bevorzugten Ausführungsform am füllseitig ersten Kupplungsabschnitt ein ersten Nutgrund-Durchmesser bereit, der vorzugsweise auf den NGV1-Standard abgestimmt ist, und die zweite Nut bietet am füllseitig zweiten Kupplungsabschnitt einen zweiten Nutgrund-Durchmesser an, der vorzugsweise auf den italienischen Standard abgestellt ist, wobei der zweite Nutgrund-Durchmesser größer ist als der erste Nutgrund-Durchmesser. Hierbei kann in einer besonders bevorzugten Ausführungsform der erste Nutgrund-Durchmesser zwischen 17 mm und 19 mm, vorzugsweise 18 mm, betragen sowie der zweite Nutgrund-Durchmesser zwischen 19 mm und 21 mm, vorzugsweise 20 mm, betragen.

Einer weiter bevorzugten Ausführungsform zufolge ist in dem Nippelgehäuse ein in Schließstellung vorgespanntes und durch die gasförmigen und/oder flüssigen Fluide bzw. Druckmedien aufdrückbares Ventilelement mit einem zugeordneten Dichtsitz geführt. Dieses Ventilelement kann bei einer weiter bevorzugten Ausführungsform als Rückschlagventil, vorzugsweise als federvorgespanntes Rückschlag-Kugelventil ausgebildet sein, das in einem Halteabschnitt im Durchflusskanal verschieblich gelagert ist. Mit diesem Ventil werden in vorteilhafter Weise unerwünschte Pfeifgeräusche beim Betankungsvorgang vollständig unterdrückt.

In einer weiter bevorzugten Ausführungsform des erfindungsgemäßen Kombinations-Anschlussnippels ist das Ventilelement im Nippelgehäuse zur Stirnseite des Nippelgehäuses hin derart vorgelagert, dass eine rückwärtige Abstützung des Ventilelements auf einer gedachten Linie liegt, die in Längsrichtung des Kombinations-Anschlussnippels vor der dem füllseitig zweiten Kupplungsabschnitt zugeordneten Nut, vorzugsweise vor der dem italienischen Standard zugeordneten Nut, liegt. Besonders vorteilhaft ist hierbei, dass infolge der nach vorwärts gerichteten Verlagerung bzw. der Vorverlagerung des Ventilelements an dessen ehemaliger Position überraschend Bauraum gewonnen wird, so dass erstmals ausreichend Wandstärke verfügbar wird, um zusätzlich zur ersten Nut für den NGV1-Standard auch noch die zweite Nut für den italienischen Standard von außen in die Umfangswand des Nippelgehäuses einarbeiten zu können, ohne dabei Gefahr zu laufen, dass die Wandstärke aufgrund der im Stand der Technik ungünstigen baulichen Verhältnisse so stark geschwächt wird, dass die beim Betanken vorliegenden Drücke nicht mehr beherrscht und ein Bersten oder Brechen des Anschlussnippels befürchtet werden muss.

Erfindungsgemäß ist das Filter dem Ventilelement vorgelagert angeordnet. Das Filter kann vorzugsweise in Form eines länglichen, spitzen Filterkegels ausgebildet sein, welcher wiederum vorzugsweise axial unverschiebbar angeordnet ist. Hierdurch kann in vorteilhafter Weise das Hochdrucksystem des erdgasbetriebenen Fahrzeuges optimal vor Verschmutzungen geschützt werden. Ausfallzeiten aufgrund von unerwünschten Verschmutzungen können durch die geringe Störanfälligkeit auf ein Minimum reduziert werden, wobei sich Schmutzfilter im Bereich von 40 Micron als wirtschaftlich interessante Alternative herausgestellt haben.

Ein weiterer Vorteil des länglich spitz ähnlich einem Tannenbaum ausgebildeten Filterkegels ist die aufgrund dieser Bauweise besonders gute Filterwirkung, da das einströmende Erdgas bereits im Bereich der Filterspitze das Filter durchdringt und Schmutzpartikelchen an dessen kegelförmiger Flanke bis zum Filtergrund geschwemmt werden, wo sie während des Betankungsvorganges verbleiben, so dass ein Eindringen in den Erdgastank des Fahrzeuges ausgeschlossenen ist. Mit dem Beenden des Tankvorgangs strömt eine kleine Restmenge an Erdgas beim Schließen des Rückschlagventils in Gegenrichtung durch das Filter zurück, wobei dann aufgrund der Entlastung des Filterkegels die Windungen am Grund für das Resterdgas leichter zu durchdringen sind, als an der Spitze, so dass die am Filtergrund anhaftenden Schmutzpartikelchen aufgenommen und nach draußen ausgeschwemmt werden. Damit ist das Filter für den nächsten Betankungsvorgang automatisch gereinigt.

Die erste NGV1-Standard-Nut ist in deren Nutgrund mit einem quer zur Längsachse des Anschlussnippels gemessenen Durchmesser ausgebildet, der dem entsprechenden Gegendurchmesser der Füllkupplung gemäß NGV1-Norm entspricht, und die zweite, dem italienischen Standard zugeordnete Nut weist einen Durchmesser auf, der dementsprechend dem italienischen Standard Rechnung trägt, wobei der Durchmesser der zweiten Nut größer ist, als der Durchmesser der ersten Nut. Damit kann in vorteilhafter Weise die breitere und längere italienische Füllkupplung gemäß dem italienischen Standard über den erfindungsgemäßen Kombinations-Anschlussnippel über dessen vorderen Kupplungsabschnitt geschoben werden, ohne dass jener Teil des Kupplungsabschnitts, der stirnseitig weiter vorne liegend für eine Füllkupplung gemäß dem NGV1-Standard ausgebildet ist, benutzt oder gar in Mitleidenschaft gezogen wird. Umgekehrt kann eine Füllkupplung gemäß dem NGV1-Standard im vorderen Teil des Kupplungsabschnitts angeflanscht werden, ohne dass der hintere Teil des Kupplungsabschnitts, der für die italienische Norm angepasst ist, benutzt oder in Mitleidenschaft gezogen wird.

Bei dem Kombinations-Anschlussnippel ist der Nippelgehäuseaußendurchmesser im Bereich zwischen der Stirnseite und der ersten NGV1-Standard-Nut kleiner ausgebildet, als der Nippelgehäuseaußendurchmesser im Bereich zwischen der ersten NGV1-Standard-Nut und der zweiten, dem italienischen Standard zugeordneten Nut. Diese Ausgestaltung des erfindungsgemäßen Kombinations-Anschlussnippels verstärkt den vorgenannten Effekt, so dass sowohl bei einer Betankung mit einer Füllkupplung gemäß dem italienischen Standard oder bei einer Betankung mit einer Füllkupplung gemäß dem NGV1-Standard immer sichergestellt ist, dass nur der entsprechende Teilbereich des Kupplungsabschnitts mit der jeweiligen Füllkupplung in Eingriff gelangt, so dass eine darauf abgestimmte, optimale Abdichtung und ein perfekter Sitz gewährleistet sind. Ferner wird der positive Effekt einer Bereitstellung einer für die zweite Nut notwendigen Materialstärke zusätzlich verstärkt.

Gemäß einer weiter bevorzugten Ausführungsform ist das Nippelgehäuse einstückig ausgebildet. Auf diese Weise kann der erfindungsgemäße Kombinations-Anschlussnippel kostengünstig beispielsweise als Drehteil spanabhebend aus einem entsprechend vorgeformten, preisgünstig zu beschaffenden Halbzeug bzw. Vollmaterial hergestellt werden. Hierbei eignet sich beispielsweise ein Edelstahl der Güte C1-33867 besonders gut. Zudem bietet die Einstückigkeit den weiteren Vorteil, dass extrem hohe Drücke vom Kombinations-Anschlussnippel aufgenommen werden können, die beispielsweise bis zu 350 bar erreichen können. Derlei Drücke sind mit mehrteilig aufgebauten Anschlussnippeln aufgrund der dann notwendigen Abdichtungen zwischen den einzelnen Bauteilen nicht realisierbar.

Die Erfindung wird nachfolgend in Ausführungsbeispielen anhand der Figuren der Zeichnung näher erläutert. Es zeigt:
- Fig. 1: im Längsschnitt auf der linken Bildhälfte eine erste Ausführungsform eines erfindungsgemäßen Kombinations-Anschlussnippels und rechts von der Längsachse auf der rechten Bildhälfte eine Ausführungsform eines aus dem Stand der Technik bekannten NGV1-Anschlussnippels;
- Fig. 2: eine Draufsicht auf einen Anschlussnippel gemäß NGV1-Standard mit durchscheinend schematisch angedeutetem Innenleben;
- Fig. 3: einen schematischen Schnitt durch die äußere Kontur des Kombinations-Anschlussnippels.

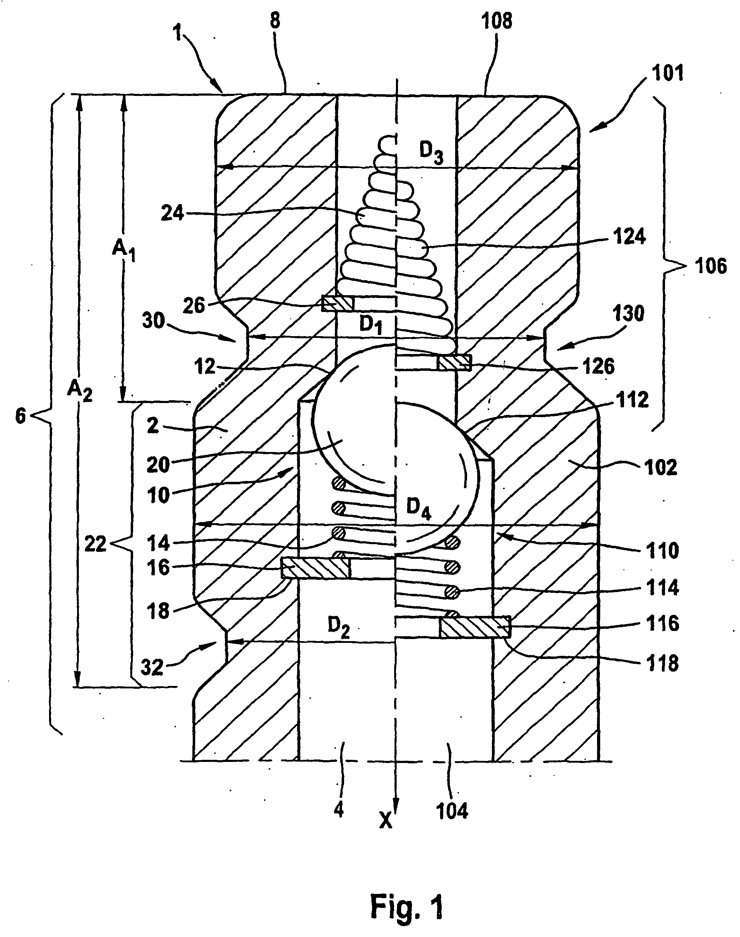

In Fig. 1 ist auf der linken Bildhälfte links von der in dieser Darstellung nach oben orientierten Längsachse X der Kombinations-Anschlussnippels 1 gemäß der Erfindung im direkten Vergleich mit einem rechts daneben abgebildeten herkömmlichen Anschlussnippel 101 gemäß dem NGV1-Standard gezeigt. Sowohl der Kombinations-Anschlussnippel 1 als auch der NGV1-Anschlussnippel 101 nach dem Stand der Technik dienen zum Betanken von Kraftfahrzeugen mit Erdgas.

Der Kombinations-Anschlussnippel 1 weist ein Nippelgehäuse 2 auf, das einen, sich in Längsrichtung X erstreckenden Durchflusskanal 4 umfasst. Der Durchflusskanal 4 kann dabei über dessen Erstreckung unterschiedliche Durchmesser aufweisen, die den jeweiligen Strömungsverhältnissen angepasst sind. Ein vorderer Kupplungsabschnitt 6 erstreckt sich von der Stirnseite 8 des Nippelgehäuses 2 in Richtung der mit dem Pfeil X angegebenen Richtung. Dieser Kupplungsabschnitt 6 dient zum Angriff einer hier nicht näher dargestellten Füllkupplung bzw. zum Angriff deren Spannzangen, falls es eine Füllkupplung mit Spannzangenmechanismus ist.

Ein Ventilelement 10, das in Schließstellung gegen einen darauf abgestimmten Dichtsitz 12 drückt, beispielsweise mittels einer Feder 14, die von einer rückwärtigen Abstützung 16 gehalten ist, welche ihrerseits mittels einer entsprechende Ausnehmung 18 im Durchflusskanal 4 gehalten ist, kann durch die gasförmigen und/oder flüssigen Fluide bzw. Druckmedien, wie z.B. das Erdgas beim Einströmen desselben davon aufgedrückt werden.

Ein herkömmlicher Anschlussnippel 101 ist im Wesentlichen analog dargestellt, wobei dessen Innenleben zur Vereinfachung dem Innenleben des erfindungsgemäßen Kombinations-Anschlussnippels nachempfunden ist, um einen direkten Vergleich zu ermöglichen bzw. zu erleichtern. Deshalb sei hier darauf hingewiesen, dass die aus dem Stand der Technik bekannten herkömmlichen Anschlussnippel 101 regelmäßig ein einfaches, im Bereich des Dichtsitzes kegelförmiges Ventilelement aufweisen, das zudem nicht als Rückschlagventil ausgebildet ist. Der herkömmliche NGV1-Anschlussnippel 101 hat einen im Nippelgehäuse 102 ausgebildeten Durchflusskanal 104. Ein vorderer Kupplungsabschnitt 106 dient zum Angriff einer Füllkupplung. Im Nippelgehäuse 102 ist hier für den direkten Vergleich ein in Schließstellung mittels einer Feder 114 vorgespanntes Ventilelement 110 als Ersatz für das vorstehend erwähnte Standard-Ventilelement gezeigt, welches sich in dieser Darstellung gegen eine rückwärtige Abstützung 116 abstützt, welche ihrerseits beispielsweise vermittels der hier dargestellten Ausnehmung 118 im Durchflusskanal 104 gehalten ist.

Der in Fig. 1 dargestellte Kombinations-Anschlussnippels 1 weist ein Ventilelement 10 auf, das als Rückschlagventil, vorzugsweise als federvorgespanntes Rückschlag-Kugelventil ausgebildet ist. Dabei ist die Ventilkugel 20 in einem Halteabschnitt 22 verschieblich gelagert. Der Kombinations-Anschlussnippel 1 ist multifunktional zum Anschluss von Füllkupplungen gemäß dem NGV1-Standard als auch gemäß dem italienischen Standard ausgebildet.

Dem Ventilelement 10 ist im Nippelgehäuse 2 ein Filter 24 vorgelagert, das vorzugsweise in Form eines länglich spitzen Filterkegels ausgebildet ist, und welches vorzugsweise axial unverschieblich von einer rückwärtige Abstützung 26 gehalten ist, wobei sich die rückwärtige Abstützung 26 vermittels einer Ausnehmung 28 oder dgl. gegen die Innenwandung des Durchflusskanals 4 abstützt.

Der Kupplungsabschnitt 6 des Kombinations-Anschlussnippels 1 ist zum Angriff von Füllkupplungen sowohl gemäß dem NGV1-Standard als auch gemäß dem italienischen Standard ausgestaltet. Dabei ist eine erste Nut 30 in einem entsprechend dem NGV1-Standard definierten Abstand A1 von der Stirnseite 8 des Anschlussnippels 1 ins Nippelgehäuse 2 eingearbeitet. Eine zweite Nut 32 ist entsprechend dem italienischen Standard im Abstand A2 von der Stirnseite 8 her betrachtet aus dem Nippelgehäuse 2 herausgebildet.

Das Ventilelement und erforderlichenfalls in dessen Folge auch das Filter 24 sind im Nippelgehäuse 2 derart zur Stirnseite 8 entgegen der Pfeilrichtung X gegenüber den herkömmlichen, aus dem Stand der Technik bekannten Positionen vorverlagert, dass die rückwärtige Abstützung 16 des Ventilelements 10 auf einer gedachten Linie zu liegen kommt, die in Längsrichtung X des Kombinations-Anschlussnippels 1 vor der dem italienischen Standard zugeordneten Nut 32 liegt. Dementsprechend befindet sich die rückwärtige Abstützung 26 des Filters 24 nach dessen Vorverlagerung auf einer gedachten Linie, die in Längsrichtung X vor der NGV1-Standard-Nut 30 zu liegen kommt. Dabei weist die erste NGV1-Standard-Nut 30 einen Durchmesser D1 auf, der der NGV1-Norm entspricht. Die dem italienischen Standard zugeordnete Nut 32 weist dementsprechend einen Durchmesser D2 auf, der einem Durchmesser entsprechend dem italienischen Standard entspricht, wobei der Durchmesser D2 der zweiten Nut 32 größer ist als der Durchmesser D1 der ersten Nut 30. Darüber hinaus ist der Nippelgehäuseaußendurchmesser D3 im Bereich zwischen der Stirnseite 8 und der ersten NGV1-Standard-Nut 30 kleiner, als der Nippelgehäuseaußendurchmesser D4 im Bereich zwischen der ersten NGV1-Standard-Nut 30 und der zweiten, dem italienischen Standard entsprechenden Nut 32.

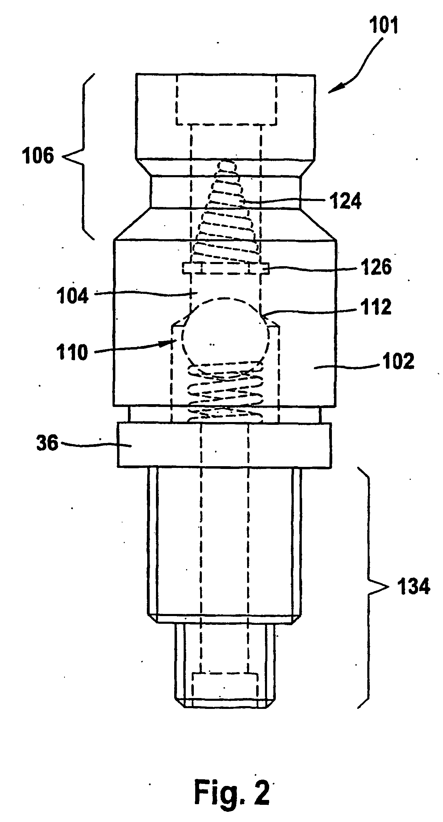

In Fig. 2 ist ein aus dem Stand der Technik bekannter Anschlussnippel 101 in Draufsicht mit durchscheinendem Innenleben dargestellt, wobei das in Fig. 2 gezeigte Innenleben dem Innenleben des Kombinations-Anschlussnippels nachempfunden ist, um direkte Vergleiche zu erleichtern. Aus dieser Ansicht wird der am Nippelgehäuse 102 ausgebildete, rückwärtige Befestigungsabschnitt 134 ersichtlich, wobei eine nicht dargestellte Mutter am Befestigungsabschnitt 134 für eine Montage des herkömmlichen Anschlussnippels 101 in einer nicht näher dargestellten Bohrung im Karosserieblech eines Kraftfahrzeuges gedacht ist. Im Nippelgehäuse 102 ist der Durchflusskanal 104 gestrichelt dargestellt. Der vordere Kupplungsabschnitt 106 dient zum Angriff einer nicht näher dargestellten Füllkupplung. Ein Ventilelement 110 schließt gegen einen Dichtsitz 112 und wird bei einer Betankung durch das einströmende Erdgas geöffnet. Vor dem Ventilelement 110 ist ein Filter 124 vorgelagert, das von einer rückwärtigen Abstützung 126 gehalten ist.

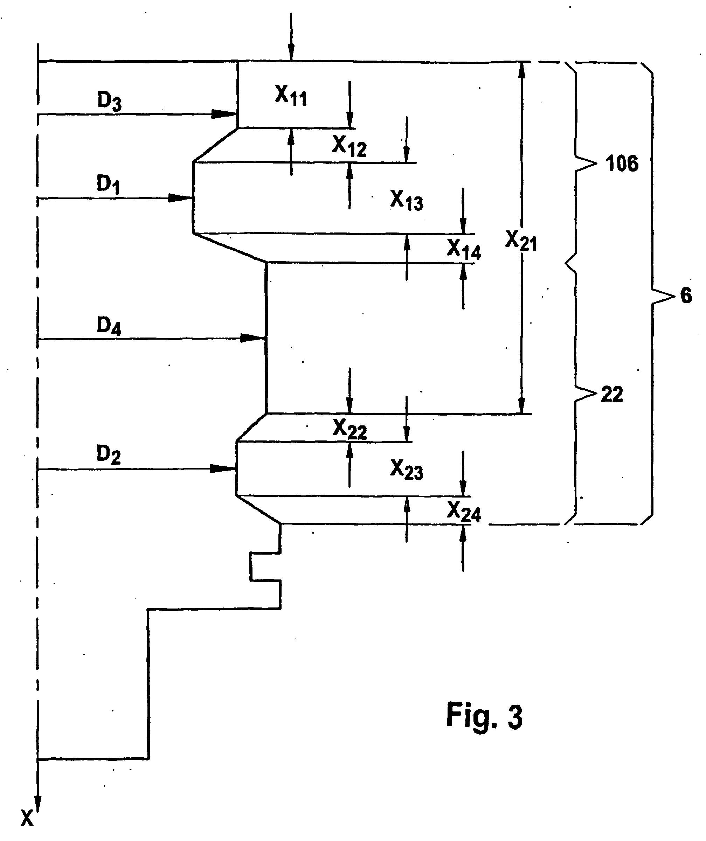

In Fig. 3 ist in schematischer Weise die äußere Kontur des erfindungsgemäßen Kombinations-Anschlussnippels 1 dargestellt, die strichpunktiert wiedergegebene Längsachse ist zur Kennzeichnung der Längsrichtung mit X bezeichnet. Diese schematische Darstellung gibt lediglich eine Hälfte des rotationssymmetrischen Kombinations-Anschlussnippels wieder. Der Kupplungsabschnitt 6 ist in zwei Kupplungsabschnitte 106 und 22 untergliedert. Der füllseitig erste Kupplungsabschnitt erstreckt sich im Wesentlichen von der Stirnseite 8 bis zum Übergang von der zweiten aufsteigenden Flanke 44 der ersten Nut 30. Die Nut 30 wird ihrerseits aus der ersten abfallenden Flanke 40, dem Nutgrund 42 und der aufsteigenden Flanke 44 ausgebildet. Hierbei beginnt die erste Flanke 40 nach einem Abstand X₁₁ von der Stirnseite aus gemessen und erstreckt sich in Längsrichtung um ein Maß X₁₂. An die erste Flanke 40 schließt sich der Nutgrund 42 an, der sich über eine Strecke X₁₃ ausdehnt. An den Nutgrund 42 schließt sich die aufsteigende zweite Flanke 44 an, die ihrerseits in Längsrichtung gemessen, eine Ausdehnung von X₁₄ aufweist. Die Summe der Strecken X₁₁ bis X₁₄ gibt im Prinzip die Ausdehnung des ersten Kupplungsabschnittes 106 wieder.

Dementsprechend beginnt der zweite Kupplungsabschnitt 22 im Anschluss an das Ende der aufsteigenden zweiten Flanke 44 zunächst mit dem zylindrischen Gehäuseaußendurchmesser D₄, wobei eine erste abfallende Flanke 46 mit einem Abstand von X₂₁ von der Stirnseite 8 aus gemessen beginnt und sich in Längsrichtung betrachtet über eine Strecke von X₂₂ ausdehnt. An diese erste Flanke 46 schließt sich wiederum ein Nutgrund 48 an, der in Längsrichtung eine Ausdehnung von X₂₃ aufweist. An den parallel zur Längsrichtung orientierten Nutgrund 48 schließt sich die zweite aufsteigende Flanke 50 an, die ihrerseits in Längsrichtung gemessen eine Ausdehnung von X₂₄ aufweist. Hierbei erstreckt sich im Prinzip der zweite Kupplungsabschnitt funktionell über den mit Bezugszeichen 22 gekennzeichneten Bereich und streckenmäßig im Prinzip über die Summe der Einzelstrecken X₂₁ bis X₂₄, je nachdem, von wo aus dieser betrachtet wird.

Die Übergänge der schrägen Flanken zum zylindrischen Gehäuseaußendurchmesser oder zum zylindrischen Nutgrund können angefast oder mit entsprechend geeigneten Radien verrundet sein. Ebenso kann der Übergang von der Stirnseite zum Gehäuseaußendurchmesser verrundet oder angefast werden.

Die vorliegende Erfindung schafft somit einen Kombinations-Anschlussnippel für die Übertragung von unter Druck vorgespannten bzw. stehenden gasförmigen und/oder flüssigen Fluiden, der vorzugsweise als Erdgas-Füllventil zum Befüllen von Kraftfahrzeug-Gastanks ausgebildet ist, mit einem Nippelgehäuse mit Durchflusskanal, einem an dem Nippelgehäuse gebildeten, rückwärtigen Befestigungsabschnitt für einen Behälter und/oder eine Leitung, einem vorderen Kupplungsabschnitt, insbesondere zum Angriff eines Spannzangenmechanismus einer Füllkupplung. Hierbei ist dieser Kupplungsabschnitt in zwei Teilbereiche zu unterteilen, die jeweils zum Angriff einer Füllkupplung gemäß dem NGV1-Standard oder einer Füllkupplung gemäß dem italienischen Standard dienen und dementsprechend darauf abgestimmt sind. Im Nippelgehäuse ist ein in Schließstellung vorgespanntes und durch das Erdgas aufdrückbares Ventilelement mit einem zugeordneten Dichtsitz geführt, wobei das Ventilelement als Rückschlagventil, vorzugsweise als federvorgespanntes Rückschlag-Kugelventil ausgebildet ist, das in einem Halteabschnitt verschieblich gelagert ist, und wobei der Anschlussnippel multifunktional als Kombinations-Anschlussnippel zum Anschluss von Füllkupplungen gemäß dem NGV1-Standard bzw. dem italienischen Standard ausgebildet ist.

Dieser neuartige Kombinations-Anschlussnippel löst somit das vorherrschende Problem der unterschiedlichen Anschlussnippel- bzw. Tankstutzenstandards in Europa überraschend auf denkbar einfachste Weise. Dieser Kombinations-Tanknippel passt nun sowohl für Kupplungssysteme nach NGV1-Standards als auch für so genannte Kupplungen nach dem bekannten italienischen Standard. Damit ist eine Zwischenkupplung oder ein Adapter nicht mehr notwendig. Dieser erfindungsgemäße Kombinations-Anschlussnippel erfüllt auch sonst alle geforderten Kriterien, wie zum Beispiel, dass Geräusche beim Tankvorgang zum größten Teil sicher ausgeschaltet sind. Gegebenenfalls kann ein Schmutzfilter mit 40 Micron integriert werden, das vorzugsweise als einem dem Ventilelement vorgelagertes Filter ausgebildet ist, das insbesondere als längliches spitzes Filterkegel durchgebildet sein kann. Somit kann das Hochdrucksystem des Fahrzeugs hervorragend vor unerwünschten Verschmutzungen geschützt werden. Vormals aus dem Stand der Technik bekannte Ausfallzeiten werden somit durch eine extrem geringe Störanfälligkeit auf ein Minimum reduziert. Zudem ist der erfindungsgemäße Kombinations-Anschlussnippel mit einem Rückschlagventil ausgestattet, das ein Öffnen und Schließen nur bei entsprechendem Systemdruck und damit schlussendlich nur ein vorschriftsmäßiges Betanken zulässt, ohne hierfür aufwendige Kontrollorgane zu benötigen. Zugleich kann damit ein hoher Durchfluss realisiert werden. Letztlich ist diese vorgeschlagene Bauart dichtungsschonend und sorgt für ein geräuscharmes Tanken.

Alle Teile des erfindungsgemäßen Kombi-Nippels sind dabei aus rostbeständigem Edelstahl hergestellt. Eine Staubschutzkappe für den Kupplungsabschnitt ist erhältlich. Alle Dichtungen sind erdgasbeständig. Eine ECE R 110 Zulassung wird angestrebt. Mit dem erfindungsgemäßen Kombinations-Anschlussnippel sind Betriebsdrücke von 200 bis max. 350 bar problemlos realisierbar. Der Temperatureinsatzbereich liegt bei wenigstens -40 bis +80 Grad, eine Steigerung auf -50 bis +100 Grad scheint greifbar. Der erfindungsgemäße Kombinations-Anschlussnippel kann mit einem entsprechenden Gewinde oder einer entsprechenden Ausnehmung problemlos in einer darauf abgestimmten Bohrung in der Karosserie des erdgasbetriebenen Fahrzeugs mit festem Sitz montiert werden.

### Bezugszeichenliste

| | | | |
|---|---|---|---|
| Kombi.-Anschlussnippel | 1 | Nippelgehäuse | 2 |
| Durchflusskanal | 4 | Kupplungsabschnitt | 6 |
| Stirnseite | 8 | Ventilelement | 10 |
| Dichtsitz | 12 | Feder | 14 |
| Abstützung Ventilelement 16 | | Ausnehmung | 18 |
| Kugel | 20 | Halteabschnitt Kugel | 22 |
| Filter | 24 | Abstützung Filter | 26 |
| erste Nut (NGV1) | 30 | zweite Nut (ital.) | 32 |
| | | Abstützung 36 | |
| | 38 | erste Flanke erste Nut | 40 |
| Nutgrund | 42 | zweite Flanke erste Nut | 44 |
| erste Flanke zweite Nut | 46 | Nutgrund | 48 |
| zweite Flanke zweite Nut | 50 | | |
| Anschlussnippel | 101 | Nippelgehäuse | 102 |
| Durchflusskanal | 104 | Kupplungsabschnitt | 106 |
| Stirnseite | 108 | Ventilelement | 110 |
| Dichtsitz | 112 | Feder | 114 |
| rückwärtige Abstützung | 116 | Ausnehmung | 118 |
| | 120 | | 122 |
| Filter | 124 | Abstützung | 126 |
| | 128 | | 130 |
| | 132 | Befestigungsabschnitt | 134 |
| | | | |
| Abstand Stirn erste Nut | A₁ | Abstand Stirn zweite Nut | A₂ |
| Durchmesser erste Nut | D₁ | Durchmesser zweite Nut | D₂ |
| Gehäuseaußendurchmesser erster Kupplungsabschn. | D₃ | Gehäuseaußendurchmesser zweiter Kupplungsabschn. | D₄ |
| Längsrichtung | X | Abstand Stirnseite bis Beginn erste Flanke erste Nut | X₁₁ |
| Längserstreckung erste Flanke erste Nut | X₁₂ | Längserstreckung Nutgrund | X₁₃ |
| Längserstreckung zweite Flanke erste Nut | X₁₄ | Abstand Stirnseite bis Beginn erste Flanke zweite Nut | X₂₁ |
| Längserstreckung erste Flanke zweite Nut | X₂₂ | Längserstreckung Nutgrund | X₂₃ |
| Längserstreckung zweite Flanke zweite Nut | X₂₄ | | |

## Patentansprüche

1. Kombinations-Anschlussnippel für die Übertragung von unter Druck stehenden gasförmigen und/oder flüssigen Fluiden, insbesondere Füllventil zum Betanken von Kraftfahrzeugen mit Erdgas, mit einem Nippelgehäuse (2) mit Durchflusskanal (4), welches einen füllseitigen Kupplungsabschnitt (6) aufweist, der insbesondere zum Angriff einer Füllkupplung mit Spannzangenmechanismus oder mit Kugelspannringmechanismus geeignet ist, und ggf. einem am Nippelgehäuse (2) gebildeten, rückwärtigen Befestigungsabschnitt (134), der insbesondere zur Montage an einen Behälter und/oder einer Leitung geeignet ist, wobei der Anschlussnippel multifunktional als Kombinations-Anschlussnippel (1) ausgestaltet ist, wozu der Kupplungsabschnitt (6) zum Anschluss von zwei unterschiedlichen Füllkupplungen, insbesondere gemäß dem NGV1-Standard oder dem italienischen Standard, ausgebildet und in zwei axial voneinander beabstandete Kupplungsabschnitte (106, 22) mit unterschiedlichen Gehäuseaußendurchmessern (D₃, D₄) untergliedert ist, wobei der Gehäuseaußendurchmesser (D₃) des füllseitig ersten Kupplungsabschnittes (106) kleiner ist als der Gehäuseaußendurchmesser (D₄) des füllseitig zweiten Kupplungsabschnittes (22) und im füllseitig ersten Kupplungsabschnitt (106) eine erste Nut (30) in einem definierten Abstand (A₁), vorzugsweise entsprechend dem NGV1-Standard, von der Stirnseite (8) des Anschlussnippels (1), und im zweiten Kupplungsabschnitt (22) eine zweite Nut (32) in einem definierten Abstand (A₂), vorzugsweise entsprechend dem italienischen Standard, von der Stirnseite (8) des Anschlussnippels (1) im Nippelgehäuse (2) ausgebildet sind, **dadurch gekennzeichnet, dass** ein Filter (24) im Nippelgehäuse (2) zur Stirnseite (8) des Nippelgehäuses (2) hin derart vorgelagert ist, dass eine rückwärtige Abstützung (26) des Filters (24) auf einer gedachten Linie liegt, die in Längsrichtung vor der dem füllseitig ersten Kupplungsabschnitt (106) zugeordneten Nut (30) liegt.

2. Kombinations-Anschlussnippel nach Anspruch 1, **dadurch gekennzeichnet, dass** die erste Nut (30) mit einer ersten abfallenden schrägen Flanke (40) in Längsrichtung (X) gemessen in einem Abstand (X₁₁) zwischen 11 mm und 13 mm, vorzugsweise von 12 mm, von der Stirnseite (8) entfernt beginnt, die schräge Flanke (40) in Längsrichtung (X) gemessen eine Ausdehnung (X₁₂) von 1,5 mm bis 2,5 mm, vorzugsweise von 2 mm aufweist, der sich daran anschließende Nutgrund (42) seinerseits in Längsrichtung (X) gemessen eine Erstreckung (X₁₃) von 4 mm bis 6 mm, vorzugsweise von 5 mm aufweist, und sich eine daran anschließende zweite aufsteigende schräge Flanke (44) in Längsrichtung (X) gemessen eine Ausdehnung (X₁₄) von 1,5 mm bis 2,5 mm, vorzugsweise von 2 mm, aufweist.

3. Kombinations-Anschlussnippel nach Anspruch 1 oder 2, **dadurch gekennzeichnet, dass** die zweite Nut (32) mit einer ersten abfallenden schrägen Flanke (46) in Längsrichtung (X) gemessen in einem Abstand (X₂₁) zwischen 32 mm und 34 mm, vorzugsweise 33 mm, von der Stirnseite (8) entfernt beginnt, die schräge Flanke (46) in Längsrichtung (X) gemessen eine Ausdehnung (X₂₂) von 1,5 mm bis 2,5 mm, vorzugsweise von 2 mm aufweist, der sich daran anschließende Nutgrund (48) seinerseits in Längsrichtung (X) gemessen eine Erstreckung (X₂₃) von 2,5 mm bis 3,5 mm, vorzugsweise von 3 mm aufweist, und eine daran anschließende zweite aufsteigende schräge Flanke (50) in Längsrichtung (X) gemessen eine Ausdehnung (X₂₄) von 1,5 mm bis 2,5 mm, vorzugsweise von 2 mm, aufweist.

4. Kombinations-Anschlussnippel nach einem der Ansprüche 1 bis 3, **dadurch gekennzeichnet, dass** der erste Gehäuseaußendurchmesser (D₃) zwischen 19 mm und 21 mm, vorzugsweise 20 mm, beträgt und der zweite Gehäuseaußendurchmesser (D₄) zwischen 22 mm und 24 mm, vorzugsweise 23 mm, beträgt.

5. Kombinations-Anschlussnippel nach einem der Ansprüche 1 bis 4, **dadurch gekennzeichnet, dass** die erste Nut (30) am füllseitig ersten Kupplungsabschnitt (106) einen ersten Nutgrund-Durchmesser (D₁), vorzugsweise entsprechend dem NGV1-Standard, bereit stellt, und die zweite Nut (32) am füllseitig zweiten Kupplungsabschnitt (22) einen zweiten Nutgrund-Durchmesser (D₂), vorzugsweise entsprechend dem italienischen Standard, bereit stellt, wobei der zweite Nutgrund-Durchmesser (D₂) größer ist, als der erste Nutgrund-Durchmesser (D₁).

6. Kombinations-Anschlussnippel nach Anspruch 5, **dadurch gekennzeichnet, dass** der erste Nutgrund-Durchmesser (D₁) zwischen 17 mm und 19 mm, vorzugsweise 18 mm, beträgt.

7. Kombinations-Anschlussnippel nach Anspruch 5 oder 6, **dadurch gekennzeichnet, dass** der zweite Nutgrund-Durchmesser (D₂) zwischen 19 mm und 21 mm, vorzugsweise 20 mm, beträgt.

8. Kombinations-Anschlussnippel nach einem der Ansprüche 1 bis 7, **dadurch gekennzeichnet, dass** ein im Nippelgehäuse (2) geführtes, in Schließstellung vorgespanntes und durch die gasförmigen und/oder flüssigen Fluide aufdrückbares Ventilelement (10) mit einem Dichtsitz (12) vorgesehen ist.

9. Kombinations-Anschlussnippel nach Anspruch 8, **dadurch gekennzeichnet, dass** das Ventilelement (10) als Rückschlagventil, vorzugsweise als federvorgespanntes Rückschlag-Kugelventil ausgebildet ist, das in einem Halteabschnitt (22) verschieblich gelagert ist.

10. Kombinations-Anschlussnippel nach Anspruch 8 oder 9, **dadurch gekennzeichnet, dass** das Ventilelement (10) im Nippelgehäuse (2) zur Stirnseite (8) des Nippelgehäuses (2) hin derart vorgelagert ist, dass eine rückwärtige Abstützung (16) des Ventilelements (10) auf einer gedachten Linie liegt, die in Längsrichtung des Kombinations-Anschlussnippels (1) vor der dem füllseitig zweiten Kupplungsabschnitt (22) zugeordneten Nut (32) liegt.

11. Kombinations-Anschlussnippel nach einem der Ansprüche 1 bis 10, **dadurch gekennzeichnet, dass** im Nippelgehäuse (2) das dem Ventilelement (10) vorgelagertes Filter (24), insbesondere ein länglicher spitzer Filterkegel, vorzugsweise axial unverschiebbar, angeordnet ist.

12. Kombinations-Anschlussnippel nach einem der Ansprüche 1 bis 11, **dadurch gekennzeichnet, dass** der Nippelgehäuseaußendurchmesser (D₃) im Bereich zwischen der Stirnseite (8) und der ersten NGV1-Standard-Nut (30) den NGV1-Standard erfüllt, und der Nippelgehäuseaußendurchmesser (D₄) im Bereich zwischen der ersten NGV1-Standard-Nut (30) und der zweiten, dem italienischen Standard zugeordneten Nut (32), den italienischen Standard erfüllt.

13. Kombinations-Anschlussnippel nach einem der Ansprüche 1 bis 12, **dadurch gekennzeichnet, dass** das Nippelgehäuse (2) einstückig ausgebildet ist.

## Claims

1. Universal connection nipple for the transfer of pressurized gaseous and/or liquid fluids, in particular a filling valve for filling the tanks of motor vehicles with natural gas, comprising a nipple housing (2) with flow channel (4) that has a filling-side coupling portion (6) that is suitable in particular for the attachment of a filling coupling with a collet chuck mechanism or with a spherical clamping ring mechanism, and optionally comprising a rear fastening portion (134), which is formed on the nipple housing (2) and is suitable in particular for fitting onto a container and/or a pipeline, wherein the connection nipple is designed multi-functionally as a universal connection nipple (1), for which purpose the coupling portion (6) is designed for the attachment of two different filling couplings, in particular according to the NGV1 standard or the Italian standard, and is subdivided into two axially mutually spaced-apart coupling portions (106, 22) having different housing outside diameters (D₃, D₄), wherein the housing outside diameter (D₃) of the first coupling portion (106) on the filling side is smaller than the housing outside diameter (D₄) of the second coupling portion (22) on the filling side, and in the nipple housing (2) there are formed, in the first coupling portion (106) on the filling side, a first groove (30) at a defined spacing (A₁), preferably corresponding to the NGV1 standard, from the front end (8) of the connection nipple (1), and, in the second coupling portion (22), a second groove (32) at a defined spacing (A₂), preferably corresponding to the Italian standard, from the front end (8) of the connection nipple (1), **characterized in that** a filter (24) in the nipple housing (2) is located forwardly in the direction of the front end (8) of the nipple housing (2) in such a way that a rear support (26) of the filter (24) lies on an imaginary line, which lies in longitudinal direction in front of the groove (30) associated with the first coupling portion (106) on the filling side.

2. Universal connection nipple according to claim 1, **characterized in that** the first groove (30) begins with a first downwardly sloping flank (40) at a distance (X₁₁) of between 11mm and 13 mm, preferably of 12 mm, from the front end (8), measured in longitudinal direction (X), the sloping flank (40) has an extent (X₁₂) of 1.5 mm to 2.5 mm, preferably of 2 mm, measured in longitudinal direction (X), the adjoining groove base (42) in turn has an extent (X₁₃) of 4 mm to 6 mm, preferably of 5 mm, measured in longitudinal direction (X), and an adjoining second upwardly sloping flank (44) has an extent (X₁₄) of 1.5 mm to 2.5 mm, preferably of 2 mm, measured in longitudinal direction (X).

3. Universal connection nipple according to claim 1 or 2, **characterized in that** the second groove (32) begins with a first downwardly sloping flank (46) at a distance (X₂₁) of between 32 mm and 34 mm, preferably of 33 mm, from the front end (8) measured in longitudinal direction (X), the inclined flank (46) has an extent (X₂₂) of 1.5 mm to 2.5 mm, preferably of 2 mm, measured in longitudinal direction (X), the adjoining groove base (48) in turn has an extent (X₂₃) of 2.5 mm to 3.5 mm, preferably of 3 mm, measured in longitudinal direction (X), and an adjoining second upwardly sloping flank (50) has an extent (X₂₄) of 1.5 mm to 2.5 mm, preferably of 2 mm, measured in longitudinal direction (X).

4. Universal connection nipple according to one of claims 1 to 3, **characterized in that** the first housing outside diameter (D₃) is between 19 mm and 21 mm, preferably 20 mm, and the second housing outside diameter (D₄) is between 22 mm and 24 mm, preferably 23 mm.

5. Universal connection nipple according to one of claims 1 to 4, **characterized in that** the first groove (30) of the first coupling portion (106) on the filling side provides a first groove base diameter (D₁), preferably according to the NGV1 standard, and the second groove (32) of the second coupling portion (22) on the filling side provides a second groove base diameter (D₂), preferably according to the Italian standard, wherein the second groove base diameter (D₂) is larger than the first groove base diameter (D₁).

6. Universal connection nipple according to claim 5, **characterized in that** the first groove base diameter (D₁) is between 17 mm and 19 mm, preferably 18 mm.

7. Universal connection nipple according to claim 5 or 6, **characterized in that** the second groove base diameter (D₂) is between 19 mm and 21 mm, preferably 20 mm.

8. Universal connection nipple according to one of claims 1 to 7, **characterized in that** a valve element (10) with a sealing seat (12) is provided, which is guided in the nipple housing (2) and biased into closed position and upon which the gaseous and/or liquid fluids can press.

9. Universal connection nipple according to claim 8, **characterized in that** the valve element (10) is designed as a non-return valve, preferably as a spring-biased non-return ball valve, which is supported displaceably in a holding portion (22).

10. Universal connection nipple according to claim 8 or 9, **characterized in that** the valve element (10) in the nipple housing (2) is located forwardly in the direction of the front end (8) of the nipple housing (2) in such a way that a rear support (16) of the valve element (10) lies on an imaginary line, which lies in longitudinal direction of the universal connection nipple (1) in front of the groove (32) associated with the second coupling portion (22) on the filling side.

11. Universal connection nipple according to one of claims 1 to 10, **characterized in that** the filter (24) disposed in front of the valve element (10), in particular an elongate pointed filter cone, is disposed preferably in an axially non-displaceable manner in the nipple housing (2).

12. Universal connection nipple according to one of claims 1 to 11, **characterized in that** the nipple housing outside diameter (D₃) in the region between the front end (8) and the first NGV1-standard groove (30) meets the NVG1 standard, and the nipple housing outside diameter (D₄) in the region between the first NGV1-standard groove (30) and the second groove (32) associated with the Italian standard meets the Italian standard.

13. Universal connection nipple according to one of claims 1 to 12, **characterized in that** the nipple housing (2) is of an integral construction.

## Revendications

1. Dispositif de raccordement combiné pour le transfert de fluides sous pression sous forme gazeuse et/ou liquide, en particulier valve de remplissage pour ravitailler des véhicules automobiles en gaz naturel, avec un corps (2) du dispositif de raccordement qui comprend un canal de passage du flux ou d'écoulement (4) et qui est muni d'un tronçon d'accouplement (6) placé du côté du remplissage, lequel est en particulier adapté pour assurer la saisie d'un accouplement de remplissage qui comprend un mécanisme à pince de serrage ou un mécanisme à bague de serrage à bille, et éventuellement avec un tronçon de fixation arrière (134) qui est formé sur le corps du dispositif de raccordement (2) et qui est en particulier adapté pour le montage sur un réservoir et/ou sur une conduite, de sorte que le dispositif de raccordement est configuré de manière multifonctionnelle en tant que dispositif de raccordement combiné (1), tandis que pour cela le dispositif de raccordement combiné (6) est configuré pour le raccordement de deux systèmes différents d'accouplements servant au remplissage, en particulier selon la norme NGV1 ou selon la norme italienne, et est subdivisé en deux tronçons d'accouplement (106, 22) espacés entre eux dans le sens axial et ayant des diamètres extérieurs de corps différents (D3, D4), et alors que le diamètre extérieur (D3) du corps du tronçon d'accouplement (106) placé en première position depuis le côté de remplissage est moins important que le diamètre extérieur (D4) du corps du tronçon d'accouplement (22) placé en deuxième position depuis le côté de remplissage et que dans le tronçon d'accouplement (106) placé en première position depuis le côté de remplissage est formée une première gorge (30) avec un espacement défini (A1) par rapport à la face frontale (8) du dispositif de raccordement (1), cet espacement correspondant de préférence à l'espacement défini par la norme NGV1, et que dans le deuxième tronçon d'accouplement (22) une deuxième gorge (32) est formée dans le dispositif de raccordement (2) avec un espacement défini (A2) par rapport à la face frontale (8) du dispositif de raccordement (1), cet espacement correspondant de préférence à l'espacement défini par la norme italienne, **caractérisé en ce qu'**un filtre (24) se trouvant dans le corps du dispositif de raccordement (2) est décalé de telle façon vers l'avant en direction de la face frontale (8) du corps (2) du dispositif de raccordement qu'un appui arrière (26) du filtre (24) se trouve sur une ligne imaginaire qui, en direction longitudinale, est disposée devant la gorge (30) associée au tronçon d'accouplement (106) placé en première position depuis le côté de remplissage.

2. Dispositif de raccordement combiné selon la revendication 1, **caractérisé en ce que** la première gorge (30) commence avec un premier flanc incliné descendant (40) ayant par rapport à la face frontale (8) un espacement (X₁₁) mesuré en direction longitudinale (X) entre 11 mm et 13 mm, de préférence de 12 mm, **en ce que** le flanc incliné (40) a une extension (X₁₂) mesurée en direction longitudinale (X) de 1,5 mm à 2,5 mm, de préférence de 2 mm, **en ce que** le fond de gorge (42) qui s'y raccorde a de son côté une extension (X₁₃) mesurée en direction longitudinale (X) de 4 mm à 6 mm, de préférence de 5 mm, et **en ce qu'**un deuxième flanc incliné montant (44) qui s'y raccorde a une extension (X₁₄) mesurée en direction longitudinale (X) de 1,5 mm à 2,5 mm, de préférence de 2 mm.

3. Dispositif de raccordement combiné selon la revendication 1 ou 2, **caractérisé en ce que** la deuxième gorge (32) commence avec un premier flanc incliné descendant (46) ayant par rapport à la face frontale (8) un espacement (X₂₁) mesuré en direction longitudinale (X) entre 32 mm et 34 mm, de préférence de 33 mm, **en ce que** le flanc incliné (46) a une extension (X₂₂) mesurée dans la direction longitudinale (X) de 1,5 mm à 2,5 mm, de préférence de 2 mm, **en ce que** le fond de gorge (48) qui s'y raccorde a de son côté une extension (X₂₃) mesurée en direction longitudinale (X) de 2,5 mm à 3,5 mm, de préférence de 3 mm et **en ce qu'**un deuxième flanc incliné montant (50) qui s'y raccorde a de son côté une extension (X₂₄) mesurée en direction longitudinale (X) de 1,5 mm à 2,5 mm, de préférence de 2 mm.

4. Dispositif de raccordement combiné selon l'une des revendications 1 à 3, **caractérisé en ce que** le premier diamètre extérieur (D3) du corps est compris entre 19 mm et 21 mm en étant de préférence égal à 20 mm et **en ce que** le deuxième diamètre extérieur (D4) du corps est compris entre 22 mm et 24 mm en étant de préférence égal à 23 mm.

5. Dispositif de raccordement combiné selon l'une des revendications 1 à 4, **caractérisé en ce que** la première gorge (30) disposée sur le tronçon d'accouplement (106) placé en première position depuis le côté de remplissage présente un premier diamètre (D1) du fond de gorge qui est de préférence adapté à la norme NGV1 et **en ce que** la deuxième gorge (32) disposée sur le tronçon d'accouplement (22) placé en deuxième position depuis le côté de remplissage présente un deuxième diamètre (D2) du fond de gorge qui est de préférence adapté à la norme italienne, le deuxième diamètre (D2) du fond de gorge étant plus grand que le premier diamètre (D1) du fond de gorge.

6. Dispositif de raccordement combiné selon la revendication 5, **caractérisé en ce que** le premier diamètre (D1) du fond de gorge est compris entre 17 mm et 19 mm en étant de préférence égal à 18 mm.

7. Dispositif de raccordement combiné selon la revendication 5 ou 6, **caractérisé en ce que** le deuxième diamètre (D2) du fond de gorge est compris entre 19 mm et 21 mm en étant de préférence égal à 20 mm.

8. Dispositif de raccordement combiné selon l'une des revendications 1 à 7, **caractérisé en ce qu'**il est prévu un élément de valve (10) qui comprend un siège d'étanchéité (12), qui est guidé dans le corps du dispositif de raccordement (2), qui est mis en précontrainte en position de fermeture et qui peut être ouvert par la pression exercée par le fluide sous forme gazeuse et/ou liquide.

9. Dispositif de raccordement combiné selon la revendication 8, **caractérisé en ce que** l'élément de valve (10) est configuré comme clapet anti-retour, de préférence comme clapet anti-retour à bille mis en précontrainte par un ressort, qui est logé coulissant dans un tronçon de retenue (22).

10. Dispositif de raccordement combiné selon la revendication 8 ou 9, **caractérisé en ce que** l'élément de valve (10) se trouvant dans le corps du dispositif de raccordement (2) est décalé de telle façon vers l'avant en direction de la face frontale (8) du corps (2) du dispositif de raccordement qu'un appui arrière (16) de l'élément de valve (10) se trouve sur une ligne imaginaire qui, dans la direction longitudinale du dispositif de raccordement combiné (1), est disposée devant la gorge (32) associée au tronçon d'accouplement (22) placé en deuxième position depuis le côté de remplissage.

11. Dispositif de raccordement combiné selon l'une des revendications 1 à 10, **caractérisé en ce que** le filtre (24), qui se trouve devant l'élément de valve (10) dans le corps du dispositif de raccordement (2) et qui est en particulier un filtre conique allongé et pointu, est disposé de préférence de manière non déplaçable dans le sens axial.

12. Dispositif de raccordement combiné selon l'une des revendications 1 à 11, **caractérisé en ce que** le diamètre extérieur (D3) du corps du dispositif de raccordement est, dans la zone entre la face frontale (8) et la première gorge (30) adaptée à la norme NGV1, conforme à la norme NGV1 et **en ce que** le diamètre extérieur (D4) du corps du dispositif de raccordement est, dans la zone entre la première gorge (30) adaptée à la norme NGV1 et la deuxième gorge (32) associée à la norme italienne, conforme à la norme italienne.

13. Dispositif de raccordement combiné selon l'une des revendications 1 à 12, **caractérisé en ce que** le corps (2) du dispositif de raccordement est réalisé en une seule pièce.
